# EUROPÄISCHE PATENTSCHRIFT

(11) **EP 3 909 482 B1**
(45) Veröffentlichungstag und Bekanntmachung des Hinweises auf die Patenterteilung: **22.03.2023**
(21) Anmeldenummer: 21169547.3
(22) Anmeldetag: 21.04.2021
(51) Int. Cl.: A47J 43/046, A47J 43/07, A47J 43/044

(54) **ZUBEREITUNGSVORRICHTUNG ZUM ZUBEREITEN VON SPEISEN**
PREPARATION DEVICE FOR PREPARING MEALS
DISPOSITIF DE PRÉPARATION PERMETTANT DE PRÉPARER LES ALIMENTS

(30) Priorität: 11.05.2020 DE 102020112607
(43) Veröffentlichungstag der Anmeldung: 17.11.2021
(73) Patentinhaber: Miele & Cie. KG, 33332 Gütersloh (DE)
(72) Erfinder: Wilkens, Henrik, 49080 Osnabrück (DE); Bergmeier, Kai, 32278 Kirchlengern (DE); Ennen, Volker, 32257 Bünde (DE); Hormann, Michael, 33332 Gütersloh (DE); Thomas, Sebastian, 85293 Reichertshausen (DE); Bergmeier, Tino, 32257 Bünde (DE)

(56) Entgegenhaltungen:
- EP-A1- 3 311 719
- CN-A- 107 773 071
- FR-A1- 2 749 149

## Beschreibung

Die Erfindung betrifft eine Zubereitungsvorrichtung zum Zubereiten von Speisen Die aus den Druckschriften EP 3 311 719 A1 und CN 107 773 071 A und FR 2 749 149 A1 bekannten Basisstationen von Multifunktionsküchenmaschinen sind groß, sperrig und unhandlich. Es kann eine Aufnahmekammer oder Kupplungsmulde in einer Arbeitsplatte geschaffen werden, in der die Basisvorrichtung einer Multifunktionsküchenmaschine versenkt wird. In solch eine Aufnahmekammer können Wasser oder andere Flüssigkeiten aus überkochenden benachbarten Töpfen oder dem Gargefäß selbst in die Aufnahmekammer laufen, darum ist ein Abwassermanagement notwendig.

Der Erfindung stellt sich die Aufgabe eine verbesserte Zubereitungsvorrichtung zum Zubereiten von Speisen zu schaffen.

Erfindungsgemäß wird diese Aufgabe durch eine Zubereitungsvorrichtung zum Zubereiten von Speisen mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass durch eine Integration der Funktionalitäten eine Basisstation einer Multifunktionsküchenmaschine direkt in ein Kochfeld oder eine andere Arbeitsplatte, eine freistehende Basisstation überflüssig gemacht und mehr Raum in der Küche geschaffen wird. Dadurch wird eine platzsparende Komponente realisiert. Durch die Integration in die Arbeitsplatte kann zudem auf ein Abwassermanagement weitestgehend verzichtet werden.

Es wird eine Zubereitungsvorrichtung zum Zubereiten von Speisen mit folgenden Merkmalen vorgestellt:
eine Arbeitsplatte, die eine Oberseite und eine Unterseite sowie eine Durchgangsöffnung aufweist; und
eine Antriebseinrichtung, die einen an der Unterseite der Arbeitsplatte angeordneten Antrieb mit einer Antriebswelle mit einem Kupplungsende zum Kuppeln der Antriebswelle mit einem rotierbaren Element eines auf die Oberseite der Arbeitsplatte aufsetzbaren Funktionsmoduls umfasst, wobei die Antriebswelle zwischen einer Ruhestellung, in der das Kupplungsende in der Arbeitsplatte versenkt ist, und einer Betriebsstellung, in der das Kupplungsende aus der Arbeitsplatte hervorragt, verfahrbar ist.

Bei der Arbeitsplatte kann es sich beispielsweise um die Platte eines Kochfeldes, zum Beispiel eine Glaskeramikplatte, handeln, oder um eine auf einer Küchenzeile montierte Arbeitsplatte oder auch um eine Tischplatte. Dabei kann die Arbeitsplatte eine Oberseite aufweisen, auf der beispielsweise Töpfe oder andere Objekte abgestellt werden können, und eine Unterseite, die der Oberseite gegenüberliegend angeordnet sein kann. An der Unterseite der Arbeitsplatte kann ein Antrieb, beispielsweise ein Motor, angeordnet sein von dem aus eine verfahrbare Antriebswelle ausgeht. Diese Antriebswelle kann im Bedarfsfall durch eine Durchgangsöffnung der Arbeitsplatte in Richtung der Oberfläche gefahren werden um eine weitgehend freischwebende Kupplung mit einem Funktionsmodul herzustellen, beispielsweise mit einem abnehmbaren Topfmodul, welches zum Beispiel über Funktionen wie die thermische Behandlung von Lebensmitteln oder deren Mixen oder Häckseln verfügt. Durch die Reduktion des Platzbedarfs der Kupplung kann vorteilhafter Weise auf einen versenkten muldenartigen Einbau einer Multifunktionsküchenmaschine verzichtet werden. Daraus ergibt sich wiederum der Vorteil, dass die Arbeitsplatte nur an wenigen Stellen unterbrochen werden muss. Neben diesem Designvorteil kann auch auf eine komplizierte Schmutzwasserabführung verzichtet werden oder es können deutlich vereinfachte Lösungen genutzt werden.

Bei der Zubereitungsvorrichtung kann ein Funktionsmodul mit einer Antriebswelle gekuppelt werden kann. Vorzugsweise ist dabei vorgesehen, dass das Funktionsmodul als ein Topfmodul zur Aufnahme der Speise ausgeführt ist. Bei dem hier vorgestellten Gerät kann die Basisvorrichtung, insbesondere durch eine entsprechende Öffnung, in beispielsweise eine Arbeitsplatte oder ein Kochfeld integriert werden, wodurch sie aus dem direkten Arbeitsumfeld des Nutzers optisch verschwinden kann. Das Funktionsmodul kann dabei im auf die Antriebswelle der Basisvorrichtung aufgesetzten Zustand zum Beispiel über eine lösbare Kupplung mit der Antriebswelle verbunden sein, sodass es einfach abgenommen werden kann um es beispielsweise zu reinigen oder in einem Schrank zu verstauen. Die Arbeitsplatte kann Teil eines Geräts, wie beispielsweise eines Kochfeldes sein, oder Teil eines Möbelstücks.

Das Funktionsmodul kann alternativ zu einem Topfmodul auch als Fleischwolfmodul oder als Entsaftermodul oder als Nudelmaschinenmodul ausgeführt sein. Die Zubereitungsvorrichtung ist insofern als System zu verstehen, als dass die Zubereitungsvorrichtung als Verkaufseinheit mit einem Topfmodul undloder einem Fleischwolfmodul undloder einem Entsaftermodul angeboten wird. Topfmodul undloder Fleischwolfmodul undloder Entsaftermodul können aber auch als separat nachkaufbare Einheiten verstanden werden.

Gemäß einer Ausführungsform kann die Zubereitungsvorrichtung eine Fixiereinrichtung zum Fixieren des Funktionsmoduls an der Arbeitsplatte umfassen. Eine Fixiereinrichtung hat den Vorteil, dass das Funktionsmodul während eines Kochvorgangs nicht so leicht verrutschen kann und das verhindert wird, dass das Funktionsmodul von einem von der Antriebswelle ausgehenden Drehmoment mit gedreht werden kann.

Die Fixiereinrichtung kann mindestens eine Ausnehmung in der Arbeitsplatte zum Einführen eines am Funktionsmodul angeordneten Haltepins umfassen. Beispielsweise können zwei oder mehr Ausnehmungen in einem definierten Abstand voneinander kreisförmig um die Durchgangsöffnung angeordnet sein, sodass sie entsprechende am Funktionsmodul angeordnete Haltepins aufnehmen können. Eine solche Fixiereinrichtung hat den Vorteil, dass sie einfach und materialschonend hergestellt und von einem Nutzer leicht gehandhabt werden kann.

Gemäß einer Ausführungsform kann an der Ausnehmung ein Wiegesensor zum Erfassen eines Gewichts des Funktionsmoduls angeordnet sein. Beispielsweise kann eine Wiegeeinheit im oder in Verbindung mit dem an der Unterseite der Arbeitsplatte angeordneten Modul, das heißt der Antriebseinrichtung, realisiert werden. Eine solche Wiegeeinheit kann beispielsweise Gewichtsdaten von einem Wiegesensor empfangen. Die Anordnung eines solchen Wiegesensors an der Ausnehmung hat den Vorteil, dass ein Gewicht des Funktionsmoduls und dessen Inhalts möglichst direkt an einer Kontaktstelle des Funktionsmoduls mit der Arbeitsplatte gemessen werden kann. Alternativ kann die Wiegeeinheit zum Beispiel über mindestens einen Sensor, zum Beispiel Biegebalken, optimal drei, am Boden der Antriebseinrichtung, auf dem die restlichen Bauteile gelagert sind, realisiert werden.

Gemäß einer weiteren Ausführungsform kann die Fixiereinrichtung mindestens einen Magneten umfassen. Dabei kann der Magnet an der Unterseite der Arbeitsplatte angeordnet sein. Beispielsweise können ein oder mehrere Magnete ähnlich den zuvor beschriebenen Ausnehmungen rund um die Durchgangsöffnung angeordnet sein. Wenn ein verwendetes Funktionsmodul im Funktionsmodulboden über entsprechende magnetische oder magnetisierbare Halteplatten verfügt, oder der Funktionsmodulboden magnetisierbar ausgeführt ist, dann kann der Funktionsmodulboden von den Magneten unterhalb der Arbeitsplatte angezogen werden. Vorteilhafterweise kann das Funktionsmodul so auf der Arbeitsplatte fixiert werden, ohne dass Ausnehmungen oder Durchbrüche durch die Arbeitsplatte benötigt werden, wodurch eine einheitliche Optik der Arbeitsplatte gewährleistet werden kann.

Alternativ zu der Fixiereinrichtung mit Magneten kann das Funktionsmodul in gleicher Weise auch über Saugnäpfe am Funktionsmodul undloder eine Saugeinrichtung an der Unterseite der Arbeitsplatte fixiert werden.

Gemäß einer weiteren Ausführungsform kann die Fixiereinrichtung mindestens einen mechanischen Haltepin umfassen. Der mechanische Haltepin kann verfahrbar ausgebildet sein. In ausgefahrenem Zustand kann der Haltepin aus der Arbeitsplatte hervorragen und in eingefahrenem Zustand bündig mit der Oberfläche abschließend in der Arbeitsplatte versenkt sein. Der Haltepin kann unter Verwendung einer geeigneten Verfahreinrichtung automatisiert verfahren werden. Beispielsweise können ein oder mehrere mechanische Haltepins durch die Arbeitsplatte hochgefahren werden, sobald ein Funktionsmodul aufgesetzt wird. Wird das Funktionsmodul wieder entfernt, dann können die Haltepins wieder in der Arbeitsplatte versenkt werden und so einen bündigen Abschluss mit der ebenen Fläche der Oberseite der Arbeitsplatte bilden, während die Zubereitungsvorrichtung nicht betrieben wird. Dadurch kann auch in dieser Ausführungsform vorteilhafter Weise eine einheitliche Optik der Arbeitsplatte erreicht werden.

Gemäß einer weiteren Ausführungsform kann der mechanische Haltepin einen Wiegesensor zum Erfassen eines Gewichts des Funktionsmoduls aufweisen. Ähnlich wie bei der zuvor beschriebenen Anordnung eines Wiegesensors an einer Ausnehmung, hat auch die Anordnung eines Wiegesensors an einem mechanischen Haltepin den Vorteil, dass ein Gewicht des Funktionsmoduls und dessen Inhalts an einer Stelle gemessen werden kann, an der das Funktionsmodul direkt aufliegt.

Gemäß einer weiteren Ausführungsform kann die Zubereitungsvorrichtung eine Steuereinrichtung umfassen, die ausgebildet sein kann um ein Aufsetzen des Funktionsmoduls auf die Oberseite der Arbeitsplatte zu erkennen und ansprechend auf ein Erkennen des Aufsetzens die Antriebswelle von der Ruhestellung in die Betriebsstellung zu verfahren. Entsprechend kann auch das wieder Entfernen des Funktionsmoduls erkannt werden, woraufhin die Antriebswelle von der Betriebsstellung zurück in die Ruhestellung verfahren werden kann. Zur Erkennung des Funktionsmoduls kann die Steuereinrichtung beispielsweise ein entsprechendes Signal bezüglich eines gemessenen Gewichts von den Wiegesensoren erhalten oder zum Beispiel einen im Funktionsmodul angebrachten NFC Chip auslesen. Eine solch automatische Steuerung der Antriebswelle hat den Vorteil, dass der Schritt des manuellen Herausfahrens und damit eine eventuell fehlerhafte Handhabung durch einen Nutzer vermieden werden kann. Optional kann die Steuereinrichtung parallel zur Antriebswelle auch das Aus- und Einfahren von mechanischen Haltepins steuern.

Gemäß einer weiteren Ausführungsform kann die Zubereitungsvorrichtung eine Dichtung zum Abdichten der Durchgangsöffnung aufweisen. Die Dichtung kann an der Durchgangsöffnung angeordnet sein um den Bereich zwischen der Antriebswelle und der Arbeitsplatte gegen auftretende Flüssigkeiten abzudichten. Vorteilhafterweise wird so die Antriebseinrichtung vor einer Schädigung durch Flüssigkeiten geschützt.

Gemäß einer weiteren Ausführungsform kann die Zubereitungsvorrichtung eine Schnittstelle zum Empfangen von Messdaten eines am Funktionsmodul angeordneten Messsensors zum Messen mindestens einer Eigenschaft des Funktionsmoduls undloder zum Übertragen von elektrischer Energie zwischen dem Funktionsmodul und der Zubereitungsvorrichtung aufweisen. Eine solche Schnittstelle kann beispielsweise an einem separaten Modul der Antriebseinheit oder alternativ in einem mechanischen Haltepin oder an einer Ausnehmung für einen Haltepin angeordnet sein. Auf diese Weise können zum Beispiel Eigenschaften des Funktionsmoduls, wie zum Beispiel die Temperatur, der Füllstand oder der Grad der Vibration erfasst werden. Die Datenübertragung kann über eine direkte elektrische Verbindung oder kabellos, zum Beispiel via Bluetooth, WLAN oder über Spulen zur Energieübertragung, erfolgen. Beispielsweise können solche Messdaten alternativ oder zusätzlich für eine externe Einheit zur Datenerfassung undloder -auswertung bereitgestellt werden, zum Beispiel ein Mobilgerät, ein Sprachassistenzsystem oder eine Cloud. Vorteilhafterweise kann der Einsatz der Zubereitungsvorrichtung, zum Beispiel während eines Kochvorgangs, unter Verwendung der Messdaten automatisch oder von einem Nutzer optimiert werden.

Gemäß einer weiteren Ausführungsform kann die Arbeitsplatte als Glaskeramikplatte undloder Kochfeldplatte ausgeformt sein. Die Ausführung der Zubereitungsvorrichtung als Teil einer Kochfeldplatte hat den Vorteil, dass die Zubereitungsvorrichtung direkt und platzsparend während eines Kochvorgangs eingesetzt werden kann. Insbesondere bei einer Ausführungsform als Kochfeldplatte eines Induktionsherds kann die Zubereitungsvorrichtung auch mit einer Induktionsspule kombiniert werden, die zum Erhitzen von im Funktionsmodul befindlichen Nahrungsmitteln genutzt werden kann, ohne dass ein zusätzliches Heizelement in oder an der Antriebseinrichtung benötigt wird.

Gemäß einem Aspekt ist die Zubereitungsvorrichtung optional mit einem Energieübertragungselement ausgestattet, wobei das Energieübertragungselement als ein resistives Heizelement oder als ein induktiver Spulenkörper ausgeführt ist. Dieses Energieübertragungselement ist bevorzugt unterhalb der Arbeitsplatte, insbesondere oberhalb der des Antriebs angeordnet. Der induktive Spulenkörper kann eine unmittelbare induktive Heizung des Funktionsmoduls bewirken oder induktiv elektrische Energie an das Funktionsmodul übertragen.

Auch wenn der beschriebene Ansatz anhand eines Haushaltgeräts beschrieben wird, kann die hier beschrieben Vorrichtung entsprechend im Zusammenhang mit einem gewerblichen oder professionellen Gerät eingesetzt werden.

Ein Ausführungsbeispiel der Erfindung ist in den Zeichnungen rein schematisch dargestellt und wird nachfolgend näher beschrieben. Es zeigt
- Figur 1: einen Querschnitt einer Zubereitungsvorrichtung mit Ausnehmungen für Haltepins gemäß einem Ausführungsbeispiel;
- Figur 2: einen Querschnitt einer Zubereitungsvorrichtung mit magnetischer Fixiereinrichtung gemäß einem Ausführungsbeispiel;
- Figur 3: einen Querschnitt einer Zubereitungsvorrichtung mit mechanischen Haltepins gemäß einem Ausführungsbeispiel; und
- Figur 4: einen Querschnitt einer Zubereitungsvorrichtung mit mechanischen Haltepins gemäß einem Ausführungsbeispiel.

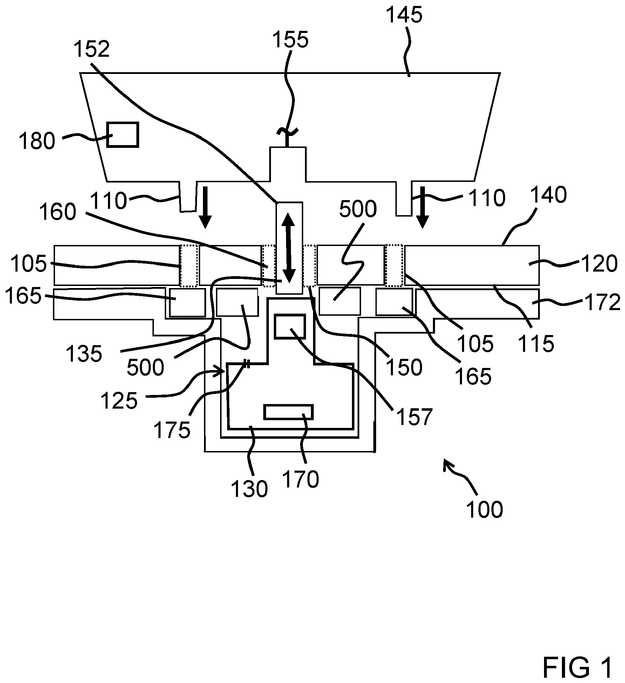

Figur 1 zeigt einen Querschnitt einer Zubereitungsvorrichtung 100 mit Ausnehmungen 105 für Haltepins 110 gemäß einem Ausführungsbeispiel. Die Zubereitungsvorrichtung 100 umfasst gemäß einem Ausführungsbeispiel zumindest die Funktionalitäten einer Basisstation einer bekannten Multifunktionsküchenmaschine. Die Zubereitungsvorrichtung 100 stellt für sich alleine oder zusammen mit einem Funktionsmodul 145, auch als Topfmodul ausgeführt oder bezeichnet eine integrierte Küchenmaschine mit Kopplung über eine Arbeitsplatte 120 dar.

An einer Unterseite 115 der Arbeitsplatte 120 ist eine Antriebseinrichtung 125 angeordnet, die einen Antrieb 130 sowie davon ausgehend eine Antriebswelle 135 umfasst. Die Antriebswelle 135 kann in diesem Ausführungsbeispiel als Verbindungselement eingesetzt werden, über das eine Kupplung mit dem auf einer Oberseite 140 der Arbeitsplatte 120 aufsetzbaren Topfmodul 145 hergestellt werden kann. Dafür kann die Antriebswelle 135 durch eine Durchgangsöffnung 150 in der Arbeitsplatte 120 hoch und runtergefahren werden, sodass das Kupplungsende 152 unterhalb des Horizonts der Arbeitsplatte 120 liegt, wenn die Zubereitungsvorrichtung 100 nicht benutzt wird. Wenn die Antriebswelle 135 beispielsweise mit dem Topfmodul 145 gekuppelt ist, dann kann sie ein Drehmoment auf ein im Topfmodul 145 befindliches rotierbares Element 155 übertragen um zum Beispiel Messer oder diverse Zusatzgeräte anzutreiben.

Die Antriebswelle 135 ermöglicht eine mechanische Kupplung für ein Multifunktionsgerät. Dabei ist eine Fixierung der Elemente des Multifunktionsgeräts ohne eine Einbaumulde in der Arbeitsplatte 120 realisiert.

In diesem Ausführungsbeispiel umfasst die Antriebseinrichtung 125 zudem eine optionale Steuereinrichtung 157. Die Steuereinrichtung 157 ist ausgebildet um das Aufsetzen eines Topfmoduls 145 auf die Oberfläche 140 zu erkennen und in diesem Fall die Antriebswelle 135 von einer Ruhestellung unterhalb der Arbeitsplatte 120 in eine Betriebsstellung zu verfahren, in der das Kupplungsende 152 oberhalb der Arbeitsplatte 120 liegt und eine Kupplung mit dem rotierbaren Element 155 eingeben kann. Wird beispielsweise das Topfmodul 145 wieder entfernt, so fährt die Steuereinrichtung 157 die Antriebswelle 135 automatisch wieder zurück nach unten in die Ruhestellung. Optional wird die Antriebswelle 135 in der Ruhestellung beispielsweise auch nur so weit versenkt, dass ihr Kupplungsende 152 in der Durchgangsöffnung 150 liegt und bündig mit der Oberfläche 140 der Arbeitsplatte 120 abschließt. Um zu verhindern, dass Flüssigkeiten in den Bereich der Antriebseinrichtung 125 gelangen, ist die Durchgangsöffnung 150 ist in diesem Ausführungsbeispiel mit einer Dichtung 160 abgedichtet. Beispielsweise weist die Durchgangsöffnung 150 einen Querschnitt von weniger als 5cm auf.

Die Stabilisierung des Topfmoduls 145 auf der Zubereitungsvorrichtung 100 kann in diesem Ausführungsbeispiel über eine Fixiereinrichtung erfolgen, wobei Haltepins 110, die an der Unterseite des Topfmoduls 145 angeordnet sind, mit Ausnehmungen 105 in der Arbeitsplatte verrastet werden können. Für eine solch lösbare und zugleich feste Verbindung können beispielsweise drei Elemente, das heißt drei Ausnehmungen 105 und die entsprechenden Haltepins 110, vorteilhaft sein, um zusätzlich zu der Antriebswelle 135 als Verbindungselemente zu funktionieren. Alternativ kann auch nur ein Haltepin 110 oder eine andere geeignete Anzahl von Haltepins 110 vorgesehen sein. Optional können die Haltepins 110 oder ähnliche Verbindungselemente beispielsweise auch zur Energieübertragung von der Zubereitungsvorrichtung 100 auf das Topfmodul 145 genutzt werden. An der Unterseite der Aussparungen 105 sind in diesem Ausführungsbeispiel optional Wiegesensoren 165 angeordnet. Wird beispielsweise ein Topfmodul 145 auf die Zubereitungsvorrichtung 100 aufgesetzt, wobei die Haltepins 110 in die Aussparungen 105 greifen, dann können die Wiegesensoren 105 durch direkten Kontakt mit den Haltepins 110 das Gewicht des Topfmoduls 145 erfassen und an eine Wiegeeinheit 170 übermitteln. Beispielhaft ist die Antriebseinrichtung 125 in einem Aufnahmeteil 172 angeordnet. Das Aufnahmeteil 172 weist einen an der Unterseite 115 der Arbeitsplatte 120 anliegenden Rand und eine abgestufte Vertiefung auf. Der Antrieb 130 ist in die Vertiefung eingesetzt. Die Wiegesensoren 165 sind auf einer Stufe der umlaufenden Wand der Vertiefung angeordnet.

Zudem weist die Zubereitungsvorrichtung 100 in diesem Ausführungsbeispiel eine Schnittstelle 175 auf, mit der Messdaten, beispielsweise bezüglich Temperatur oder Füllstand des Topfmoduls 145, eines am Topfmodul 145 angeordneten Messsensors 180 empfangen werden können. Optional kann eine solche Schnittstelle 175 auch zum Übertragen von elektrischer Energie genutzt werden, beispielsweise für die Stromversorgung von Zusatzfunktionen des Topfmoduls, wie zum Beispiel einem Fühlstandsensor oder einer externen Heizung, insbesondere wenn eine solche Heizung einen elektrisch betriebenen Widerstandsheizkörper umfasst.

Gemäß einem Ausführungsbeispiel ist die Arbeitsplatte 120 als eine Kochfeldplatte, beispielsweise in Form einer Glaskeramikplatte ausgeformt. Benachbart zu der Zubereitungsvorrichtung 100 weist die Arbeitsplatte beispielsweise zumindest eine Kochzone auf, die entsprechend zu Kochzonen bekannter Herde, beispielsweise eines Induktionsherds ausgeformt ist. Somit ist die Arbeitsplatte 120 gemäß einem Ausführungsbeispiel Teil eines Induktionsherds oder Induktionskochfelds. Somit können die Funktionen einer Multifunktionsküchenmaschine auf ein Kochfeld übertragen werden.

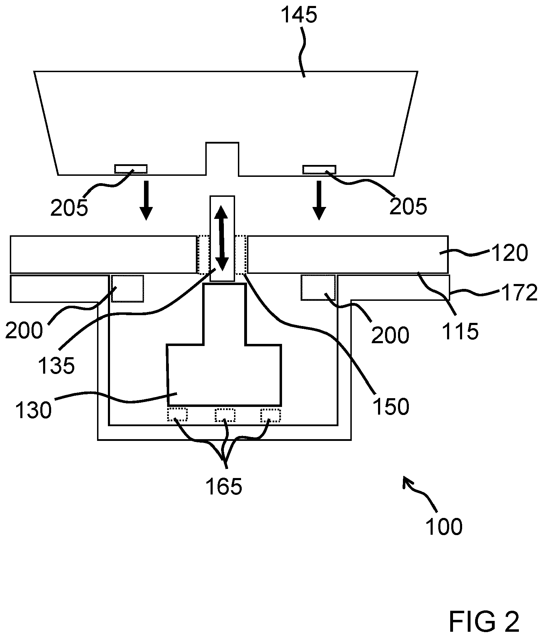

Figur 2 zeigt einen Querschnitt einer Zubereitungsvorrichtung 100 mit magnetischer Fixiereinrichtung gemäß einem Ausführungsbeispiel. Der Aufbau der Zubereitungsvorrichtung 100 ähnelt in diesem Ausführungsbeispiel dem in Figur 1 beschriebenen Aufbau, wobei die Fixiereinrichtung als Alternative zu den in Figur 1 beschriebenen Ausnehmungen in diesem Ausführungsbeispiel Magnete 200 umfasst, die an der Unterseite 115 der Arbeitsplatte 120 angeordnet sind. Entsprechend zu diesen Magneten 200 sind am Boden des Topfmoduls 145 Halteplatten 205 angeordnet, die beim Aufsetzen des Topfmoduls 145 auf die Zubereitungsvorrichtung 100 von den Magneten 200 angezogen werden, sodass das Topfmodul 145 an der Zubereitungsvorrichtung 100 fixiert werden kann. Alternativ zu der Fixiereinrichtung mit Magneten 200 kann das Topfmodul 145 in gleicher Weise auch über Saugnäpfe am Topfmodul 145 undloder eine Saugeinrichtung an der Unterseite der Arbeitsplatte 120 fixiert werden. Die Arbeitsplatte 120 ist in diesem Ausführungsbeispiel, abgesehen von der Durchgangsöffnung 150 für die Antriebswelle 135, durchgehend ausgeformt und die Magnete 200 sind für einen Nutzer nicht sichtbar angeordnet. Aufgrund der hier gezeigten Ausführung der Fixiereinrichtung ist in diesem Ausführungsbeispiel die Position der optionalen Wiegesensoren 165 unterhalb des Antriebs 130. Die Wiegesensoren 165 sind dabei zwischen dem Antrieb 130 und einem Boden der Vertiefung des Aufnahmeteils 172 angeordnet.

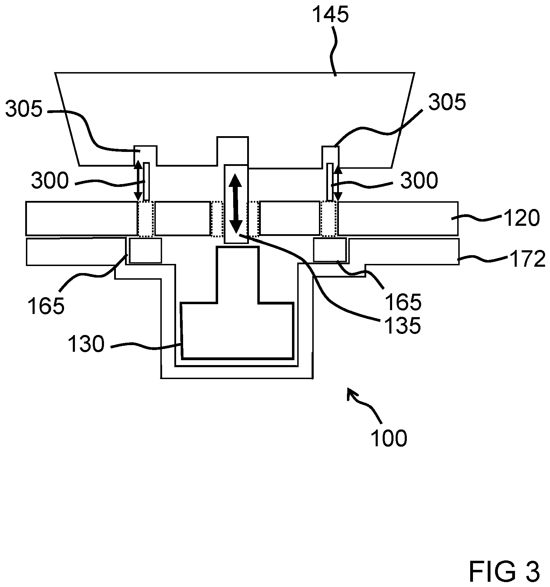

Figur 3 zeigt einen Querschnitt einer Zubereitungsvorrichtung 100 mit mechanischen Haltepins 300 gemäß einem Ausführungsbeispiel. Im Unterschied zu den in Figur 1 und Figur 2 beschriebenen Ausführungsbeispielen weist die Zubereitungsvorrichtung 100 in diesem Ausführungsbeispiel mechanische Haltepins 300 auf, die durch die Arbeitsplatte 120 hochgefahren werden können und in entsprechende Topfausnehmungen 305 am Topfmodul 145 greifen können. Der Mechanismus zum Verfahren der mechanischen Haltepins 300 kann dabei dem in Figur 1 beschriebenen Mechanismus zum Verfahren der Antriebswelle 135 entsprechen oder mit diesem Mechanismus gekoppelt sein. Beispielsweise können die mechanischen Haltepins 300 automatisch hochfahren, wenn ein Topfmodul 145 auf die Zubereitungsvorrichtung 100 aufgesetzt wird und entsprechend zurückfahren, wenn das Topfmodul 145 wieder weggenommen wird. Dabei können die Haltepins 300 beispielsweise beim Zurückfahren bündig mit der Arbeitsplatte 120 abschließen.

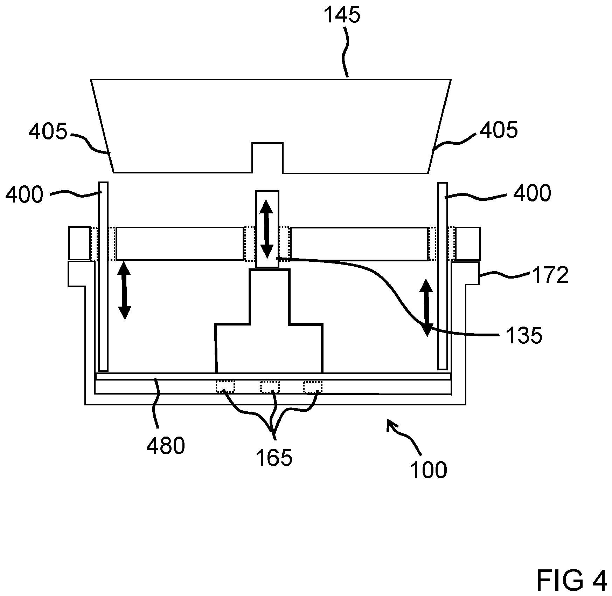

Figur 4 zeigt einen Querschnitt einer Zubereitungsvorrichtung 100 mit mechanischen Haltepins 400 gemäß einem Ausführungsbeispiel. Im Unterschied zu der in Figur 3 beschriebenen Fixiereinrichtung sind in diesem Ausführungsbeispiel die mechanischen Haltepins 400 mit einem größeren Abstand zur Antriebswelle 135 angeordnet und es werden keine Topfausnehmungen wie in Figur 3 beschrieben benötigt. Stattdessen können die mechanischen Haltepins 400 ein mit schrägen Außenwänden 405 ausgeformtes Topfmodul 145 in einem Randbereich erfassen, wobei das Topfmodul 145 sowohl auf den mechanischen Haltepins 400 aufliegen, als auch zwischen ihnen eingeklemmt werden kann.

Gemäß einem Ausführungsbeispiel sind die mechanischen Haltepins 400 entsprechend den anhand von Figur 3 beschriebenen Haltepins verfahrbar ausgeführt.

Beispielhaft ist der Antrieb 130 auf einer Trägerplatte 480 angeordnet, die von den auf einem Boden der Vertiefung des Aufnahmeteils 172 angeordneten Wiegesensoren 165 getragen wird. Die mechanischen Haltepins 400 sitzen auf der Trägerplatte 480 auf.

Die anhand der Figuren beschriebene Zubereitungsvorrichtung 100 stellt gemäß Ausführungsbeispielen eine Kombination einer Geräteeinheit "Multifunktionsküchenmaschine" mit den Funktionalitäten Gewichtsbestimmung, mechanische Manipulation und insbesondere Rotationsbewegung, wie z.B. Rühren, Mixen oder Häckseln, in Kombination mit einem abnehmbaren Behälter in Form des Topfmoduls 145 dar. Optional ist eine thermische Behandlung von Lebensmitteln in Kombination mit dem abnehmbaren Topfmodul 145 mit einer Aufnahmeeinheit möglich. Dabei kann die Aufnahmeeinheit im Wesentlichen flächenbündig mit einer waagerechten Oberfläche der Arbeitsplatte 120, beispielsweise einer Kochinsel oder Tischplatte, montiert werden, wie z.B. einem Kochfeld oder einem ähnlich ausgebildeten Modul ohne zusätzliche Einrichtung zum Erwärmen eines Topfes oder einer Pfanne.

Durch eine ausfahrbare Kupplung in Form der Antriebswelle 135 und Fixierungselemente, welche entweder am abnehmbaren Topfmoduls 145 oder unterhalb der Ebene der Arbeitslatte 120 angebracht sind, können die Flächen der Ausschnitte in der Arbeitsplatte 120 minimiert werden. Dies hat den Vorteil, dass auf ein Schmutzwasserablaufsystem weitestgehend verzichtet werden kann und zusätzlich ein reduziertes Design möglich ist.

Der beschriebene Ansatz ermöglicht einen Einbau in ein Kochfeld, optimaler Weise in ein Kochfeld von mindestens 60 cm Breite und/oder Tiefe, und optional eine Fixierung beziehungsweise Kupplung ohne Versenkung und hohen Aufbau. Dabei können die Elemente der Fixiereinrichtung und der Kupplungsaufbau sehr klein gehalten werden. Dadurch ist eine Sichtbarkeit der Kopplungselemente minimiert. Zudem ist ein Heizen möglich. Da sich das Topfmodul 145 über der Arbeitsplatte 120 befindet, gibt es kaum eindringendes Wasser. Vorteilhafterweise erfolgt die Kraftübertragung mechanisch, wodurch eine hohe Leistungsübertragung möglich ist.

Gemäß einem Ausführungsbeispiel ist die Zubereitungsvorrichtung 100 als eine Geräteeinheit oder einem Modul einer Multifunktionsküchenmaschine ausgeführt. Die Zubereitungsvorrichtung 100 besteht gemäß einem Ausführungsbeispiel aus der Wiegeeinheit 170, dem Antrieb 130 mit Kupplung und Anschlüssen für die Stromversorgung für Zusatzfunktionen des abnehmbaren Topfmoduls 145, wie z.B. einer externen Heizung oder eines Füllstandsensors. Die Zubereitungsvorrichtung 100 ist optional mit einem Heizelement 500 (Strahlung oder induktive Heizung) ausgestattet. Die Wiegeeinheit 170 ist in oder in Verbindung mit der Zubereitungsvorrichtung 100 realisiert.

Diese Wiegeeinheit 170 kann zum Beispiel über mindestens einen Wiegesensor 165, zum Beispiel Biegebalken, optimal drei, am Boden des Moduls, auf denen die restlichen Bauteile gelagert sind, realisiert sein. Alternativ kann die über die der Haltepins 110 des Topfmoduls 145 übertragene Kraft gemessen werden.

Die Kupplung der Zubereitungsvorrichtung 100 kann mit der Antriebswelle 135 hoch und runtergefahren werden, so dass sie unterhalb des Horizonts der Arbeitsplatte 120 liegt, wenn die Zubereitungsvorrichtung 100 nicht benutzt wird.

Die Stabilisierung des Topfmoduls 145 kann, wie beispielsweise in Figur 1 beschrieben, über Haltepins 110 Topfmodulboden erfolgen, welche über Aussparungen in der Ebene mit den Wiegesensoren 165 verrastet werden. Alternativ können die Haltepins 110 durch Halteplatten 205 ersetzt werden, welche über nicht sichtbare Magnete 200 unterhalb der Arbeitsplatte 120 gehalten werden, wie beispielsweise in Figur 2 beschrieben, oder mit mechanischen Haltepins 110, 300, 400, wie beispielsweise in Figur 3 und 4 beschrieben, welche von unten ausgefahren werden.

Die Kraftmessung für die Wiegefunktionalität kann wahlweise über Sensoren unterhalb der Haltepins 110 oder unterhalb des Antriebs 130 oder unterhalb eines Teilmoduls, welches sowohl Haltepins 110 als auch den Antrieb 130 beinhaltet, positioniert sein. Alternativ kann der Wiegesensor 165 auch Teil eines oder mehrerer Haltepins 110 sein.

Die Abdichtung gegen das Kochfeld erfolgt über eine geeignete Dichtung. Die Kupplung der Zubereitungsvorrichtung 100 mit dem Topfmodul 145 kann weitgehend freischweben sein, so dass die Wiegefunktionalität möglichst wenig beeinflusst wird.

Wenn die Zubereitungsvorrichtung 100 nicht betrieben wird und die Haltepins 110 eingefahren beziehungsweise ausgeschaltet sind, können diese einen Abschluss mit der ebenen Fläche bilden.

Neben dem manuellen Herausfahren der Fixierungselemente gibt es optional noch die Möglichkeit das Topfmodul 145 zu erkennen und die Antriebswelle 135 auszufahren beziehungsweise zu befestigen, zum Beispiel über einen NFC Chip im Topfmodul 145. Alternativ kann das Topfmodul 145 auch über Saugnäpfe am Topfmodul 145 undloder eine Saugeinrichtung unterhalb der Arbeitsplatte 120 fixiert werden, ähnlich der in Figur 2 beschriebenen Fixiervorrichtung.

Gemäß den in den Figuren beschriebenen Ausführungsbeispielen besteht die Zubereitungsvorrichtung 100 aus je einem Modul ober- und unterhalb der Arbeitsplatte 120 mit Verbindungselementen, die optional hoch und runtergefahren werden können. Dabei überträgt mindestens ein in der Zubereitungsvorrichtung 100 unterhalb der Glaskeramik angetriebenes Verbindungselement ein Drehmoment auf ein rotierbares Element 155 in dem Topfmodul 145 oberhalb der Arbeitsplatte 120 um zum Beispiel Messer anzutreiben, wodurch eine Abgrenzung zu einem magnetisch angetriebenen Rührfisch in einem Topfmodul 145 gegeben ist. Alternativ können auf diese Weise diverse Zusatzgeräte angetrieben werden. Dabei nimmt mindestens ein Verbindungselement vertikal Kraft auf. Vorteilhaft sind Sensoren, die die vertikale Kraft an mindestens einem der Verbindungselemente messen, zum Beispiel um die Wiegefunktion zu realisieren. Zudem sind drei Elemente zusätzlich zu dem Verbindungselement vorteilhaft, welches das Drehmoment überträgt, sowie eine lösbare feste Verbindung, zum Beispiel Verrastung, zwischen den Modulen oberhalb und unterhalb der Glaskeramik mittels der Verbindungselemente.

Die Energieübertragung von der Zubereitungsvorrichtung 100 unterhalb der Glaskeramik zum Topfmodul 145 oberhalb der Glaskeramik kann induktiv ausgeführt werden oder über mindestens einen elektrischen Kontakt, der beispielsweise als zusätzliches Verbindungselement oder als Zusatznutzen für mindestens eines der vertikal kraftübertragenden Verbindungselemente oder in Kombination von beiden ausgeführt sein kann.

Zusätzlich kann ein Element zum Erwärmen des Topfmoduls 145 oberhalb der Arbeitsplatte 120 entweder als induktiv erwärmtes Bauteil, beispielsweise Wirbelströme und Ummagnetisierungsverluste, oder als elektrisch betriebener Widerstandsheizkörper ausgeformt sein. Zudem kann die Multifunktionsküchenmaschine eine Einrichtung zum Messen einer Eigenschaft des Topfmoduls 145 oberhalb der Arbeitsplatte 120, zum Beispiel Temperatur, Vibration oder Füllstand, umfassen, sowie eine Einrichtung zur Übermittlung dieser Information an die Zubereitungsvorrichtung 100 unterhalb der Arbeitsplatte 120, sowie eine Einrichtung zum Übermitteln dieser Information an eine Elektronikeinheit der im Wesentlichen flächenbündigen Aufnahmeeinheit, zum Beispiel eines Herds, undloder eine damit verbundene Einheit zur Datenerfassung undloder Datenauswertung, wie zum Beispiel eine Cloud, ein Mobilgerät, oder ein Sprachassistenzsystem. Die Datenübertragung kann über eine direkte elektrische Verbindung, zum Beispiel über ein Verbindungselement, oder kabellos, zum Beispiel über Bluetooth, WLAN, oder über Spulen zur Energieübertragung, erfolgen.

Bei den beschriebenen Ausführungsbeispielen der Zubereitungsvorrichtung 100 betragen die Durchbrüche in der Arbeitsplatte 120 maximal 10 %, 25% oder 50% der Fläche des Topfmodulbodens und der komplette Garbereich des Topfmoduls 145 befindet sich oberhalb des Horizonts der Arbeitslatte. Eine mechanische Leistungsübertragung findet mit mindestens 300 Watt statt und es erfolgt eine Datenübertragung vom Topfmodul 145 oberhalb der Arbeitsplatte 120 an die Zubereitungsvorrichtung 100 unterhalb der Arbeitsplatte 120. Die Auflagefläche der Arbeitsplatte 120 für Töpfe undloder Aufsätze kann variabel ausgeführt werden.

## Patentansprüche

1. Zubereitungsvorrichtung (100) zum Zubereiten von Speisen, wobei die Zubereitungsvorrichtung (100) folgende Merkmale aufweist:
ein Funktionsmodul (145) mit einem rotierbaren Element (155) und
eine Antriebseinrichtung (125) die einen Antrieb (130) mit einer Antriebswelle (135) mit einem Kupplungsende (152) zum Kuppeln der Antriebswelle (135) mit dem rotierbaren Element (155) des aufsetzbaren Funktionsmoduls (145) umfasst,
**gekennzeichnet durch**
eine Arbeitsplatte (120), die eine Oberseite (140) und eine Unterseite (115) sowie eine Durchgangsöffnung (150) aufweist,
wobei der Antrieb (130) mit der Antriebswelle (135) der Antriebseinrichtung (125) an der Unterseite (115) der Arbeitsplatte (120) angeordnet ist,
wobei das Funktionsmodul (145) auf der Oberseite der Arbeitsplatte (120) aufsetzbar ist,
wobei die Antriebswelle (135) zwischen einer Ruhestellung, in der das Kupplungsende (152) in der Arbeitsplatte (120) versenkt ist, und einer Betriebsstellung, in der das Kupplungsende (152) aus der Arbeitsplatte (120) hervorragt, verfahrbar ist.

2. Zubereitungsvorrichtung (100) gemäß Anspruch 1, mit einer Fixiereinrichtung zum Fixieren des Funktionsmoduls (145) an der Arbeitsplatte (120).

3. Zubereitungsvorrichtung (100) gemäß Anspruch 2, wobei die Fixiereinrichtung mindestens eine Ausnehmung (105) in der Arbeitsplatte (120) zum Einführen eines am Funktionsmodul (145) angeordneten Haltepins (110, 300, 400) umfasst.

4. Zubereitungsvorrichtung (100) gemäß Anspruch 3, wobei an der Ausnehmung (105) ein Wiegesensor (165) zum Erfassen eines Gewichts des Funktionsmoduls (145) angeordnet ist.

5. Zubereitungsvorrichtung (100) gemäß einem der Ansprüche 2 bis 4, wobei die Fixiereinrichtung mindestens einen Magneten (200) umfasst, insbesondere wobei der Magnet (200) an der Unterseite (115) der Arbeitsplatte (120) angeordnet ist.

6. Zubereitungsvorrichtung (100) gemäß einem der Ansprüche 2 bis 5, wobei die Fixiereinrichtung mindestens einen mechanischen Haltepin (110, 300, 400) umfasst, wobei der mechanische Haltepin (110, 300, 400) verfahrbar ausgebildet ist und in ausgefahrenem Zustand aus der Arbeitsplatte (120) hervorragt und in eingefahrenem Zustand bündig mit der Oberfläche 140 abschließend in der Arbeitsplatte (120) versenkt ist.

7. Zubereitungsvorrichtung (100) gemäß Anspruch 6, wobei der mechanische Haltepin (110, 300, 400) einen Wiegesensor (165) zum Erfassen eines Gewichts des Funktionsmoduls (145) aufweist.

8. Zubereitungsvorrichtung (100) gemäß einem der Ansprüche 2 bis 7, wobei zumindest zwei der Haltepins als galvanischer Kontakt zur Übertragung elektrischer Energie an das Funktionsmodul ausgeführt sind.

9. Zubereitungsvorrichtung (100) gemäß einem der vorangegangenen Ansprüche, mit einer Steuereinrichtung (157), die ausgebildet ist um ein Aufsetzen des Funktionsmoduls (145) auf die Oberseite der Arbeitsplatte (120) zu erkennen und ansprechend auf ein Erkennen des Aufsetzens die Antriebswelle (135) von der Ruhestellung in die Betriebsstellung zu verfahren.

10. Zubereitungsvorrichtung (100) gemäß einem der vorangegangenen Ansprüche, mit einer Dichtung zum Abdichten der Durchgangsöffnung (150).

11. Zubereitungsvorrichtung (100) gemäß einem der vorangegangenen Ansprüche, mit einer Schnittstelle (175) zum Empfangen von Messdaten eines am Funktionsmodul (145) angeordneten Messsensors (180) zum Messen mindestens einer Eigenschaft des Funktionsmoduls (145) und/oder zum Übertragen von elektrischer Energie zwischen dem Funktionsmodul (145) und der Zubereitungsvorrichtung (100).

12. Zubereitungsvorrichtung (100) gemäß einem der vorangegangenen Ansprüche, wobei die Arbeitsplatte (120) als Glaskeramikplatte undloder Kochfeldplatte ausgeformt ist.

13. Zubereitungsvorrichtung (100) gemäß einem der vorangegangenen Ansprüche, wobei zwischen der Arbeitsplatte (120) und der Antriebseinrichtung (125), insbesondere im Bereich eines auf der Arbeitsplatte (120) angeordneten Funktionsmoduls (145), ein Heizelement (500) zur Erwärmung des Funktionsmoduls (145) beziehungsweise einer in dem Funktionsmodul (145) aufgenommenen Speise.

14. Kochfeld mit folgenden Merkmalen:
eine Arbeitsplatte (120) mit wenigstens einer Kochzone und einer
Durchgangsöffnung (150);
eine zur Durchgangsöffnung (150) offenen Aufnahmekammer;
mindestens eine Heizeinrichtung zum Beheizen der wenigstens einen Kochzone; und eine Zubereitungsvorrichtung (100) gemäß einem der vorangegangenen Ansprüche 1 bis 11, welche in der Aufnahmekammer angeordnet ist.

## Claims

1. Preparation device (100) for preparing meals, the preparation device (100) comprising the following features:
a functional module (145) having a rotatable element (155), and
a drive means (125) comprising a drive (130) having a drive shaft (135) having a coupling end (152) for coupling the drive shaft (135) to the rotatable element (155) of the placeable functional module (145),
**characterised by**
a worktop (120) having a top side (140) and a bottom side (115) and a through-opening (150),
the drive (130) being arranged together with the drive shaft (135) of the drive means (125) on the bottom side (115) of the worktop (120),
the functional module (145) being placeable on the top side of the worktop (120),
the drive shaft (135) being movable between a rest position in which the coupling end (152) is sunk in the worktop (120) and an operating position in which the coupling end (152) protrudes from the worktop (120).

2. Preparation device (100) according to claim 1, comprising a securing means for securing the functional module (145) to the worktop (120).

3. Preparation device (100) according to claim 2, wherein the securing means comprises at least one recess (105) in the worktop (120) for inserting a holding pin (110, 300, 400) arranged on the functional module (145).

4. Preparation device (100) according to claim 3, wherein a weighing sensor (165) for detecting a weight of the functional module (145) is arranged at the recess (105).

5. Preparation device (100) according to any of claims 2 to 4, wherein the securing means comprises at least one magnet (200), in particular wherein the magnet (200) is arranged on the bottom side (115) of the worktop (120).

6. Preparation device (100) according to any of claims 2 to 5, wherein the securing means comprises at least one mechanical holding pin (110, 300, 400), wherein the mechanical holding pin (110, 300, 400) is designed to be movable and projects out of the worktop (120) in the extended state and is ultimately sunk in the worktop (120) so as to be flush with the surface 140 in the retracted state.

7. Preparation device (100) according to claim 6, wherein the mechanical holding pin (110, 300, 400) comprises a weighing sensor (165) for detecting a weight of the functional module (145).

8. Preparation device (100) according to any of claims 2 to 7, wherein at least two of the holding pins are designed as a galvanic contact for transmitting electrical energy to the functional module.

9. Preparation device (100) according to any of the preceding claims, comprising a controller (157) which is designed to detect placement of the functional module (145) on the top side of the worktop (120) and, in response to said placement being detected, to move the drive shaft (135) from the rest position into the operating position.

10. Preparation device (100) according to any of the preceding claims, comprising a seal for sealing the through-opening (150).

11. Preparation device (100) according to any of the preceding claims, comprising an interface (175) for receiving measurement data of a measurement sensor (180) arranged on the functional module (145) for measuring at least one property of the functional module (145) and/or for transmitting electrical energy between the functional module (145) and the preparation device (100).

12. Preparation device (100) according to any of the preceding claims, wherein the worktop (120) is in the form of a glass ceramic plate and/or a hob plate.

13. Preparation device (100) according to any of the preceding claims, wherein a heating element (500) for heating the functional module (145) or a meal received in the functional module (145) between the worktop (120) and the drive means (125), in particular in the region of a functional module (145) arranged on the worktop (120).

14. Hob having the following features:
a worktop (120) having at least one cooking zone and a through-opening (150);
a receiving chamber which is open to the through-opening (150);
at least one heating means for heating the at least one cooking zone; and
a preparation device (100) according to any of the preceding claims 1 to 11, which is arranged in the receiving chamber.

## Revendications

1. Dispositif de préparation (100) permettant la préparation d'aliments, le dispositif de préparation (100) présentant les caractéristiques suivantes :
un module fonctionnel (145) comportant un élément rotatif (155) et
un appareil d'entraînement (125) qui comprend un entraînement (130) comportant un arbre d'entraînement (135) comportant une extrémité d'accouplement (152) pour l'accouplement de l'arbre d'entraînement (135) avec l'élément rotatif (155) du module fonctionnel (145) pouvant être placé,
**caractérisé par**
un plan de travail (120) qui présente une face supérieure (140) et une face inférieure (115) ainsi qu'une
ouverture de passage (150),
dans lequel l'entraînement (130) comportant l'arbre d'entraînement (135) de l'appareil d'entraînement (125) est disposé sur la face inférieure (115) du plan de travail (120),
dans lequel le module fonctionnel (145) peut être placé sur la face supérieure du plan de travail (120),
dans lequel l'arbre d'entraînement (135) peut être déplacé entre une position de repos, dans laquelle l'extrémité d'accouplement (152) est encastrée dans le plan de travail (120), et une position de fonctionnement, dans laquelle l'extrémité d'accouplement (152) fait saillie à partir du plan de travail (120).

2. Dispositif de préparation (100) selon la revendication 1, comportant un appareil de fixation permettant de fixer le module fonctionnel (145) au plan de travail (120).

3. Dispositif de préparation (100) selon la revendication 2, dans lequel l'appareil de fixation comprend au moins un évidement (105) dans le plan de travail (120) pour l'introduction d'une broche de retenue (110, 300, 400) disposée sur le module fonctionnel (145).

4. Dispositif de préparation (100) selon la revendication 3, dans lequel un capteur de pesée (165) est disposé sur l'évidement (105) pour la détection d'un poids du module fonctionnel (145).

5. Dispositif de préparation (100) selon l'une des revendications 2 à 4, dans lequel l'appareil de fixation comprend au moins un aimant (200), en particulier dans lequel l'aimant (200) est disposé sur la face inférieure (115) du plan de travail (120).

6. Dispositif de préparation (100) selon l'une des revendications 2 à 5, dans lequel l'appareil de fixation comprend au moins une broche de retenue (110, 300, 400) mécanique, la broche de retenue (110, 300, 400) mécanique étant conçue de manière à pouvoir être déplacée et faisant saillie à partir du plan de travail (120) à l'état déployé et, à l'état replié, étant finalement encastrée dans le plan de travail (120) en affleurement avec la surface supérieure 140.

7. Dispositif de préparation (100) selon la revendication 6, dans lequel la broche de retenue (110, 300, 400) mécanique présente un capteur de pesée (165) pour la détection d'un poids du module fonctionnel (145).

8. Dispositif de préparation (100) selon l'une des revendications 2 à 7, dans lequel au moins deux des broches de retenue sont conçues en tant que contact galvanique pour la transmission d'énergie électrique au module fonctionnel.

9. Dispositif de préparation (100) selon l'une des revendications précédentes, comportant un appareil de commande (157) configuré pour détecter une mise en place du module fonctionnel (145) sur la face supérieure du plan de travail (120) et pour déplacer l'arbre d'entraînement (135) de manière correspondante de la position de repos vers la position de fonctionnement lors d'une détection de la mise en place.

10. Dispositif de préparation (100) selon l'une des revendications précédentes, comportant un joint permettant de rendre étanche l'ouverture de passage (150).

11. Dispositif de préparation (100) selon l'une des revendications précédentes, comportant une interface (175) pour la réception de données de mesure d'un capteur de mesure (180) disposé sur le module fonctionnel (145) et permettant la mesure d'au moins une propriété du module fonctionnel (145) et/ou pour la transmission d'énergie électrique entre le module fonctionnel (145) et le dispositif de préparation (100).

12. Dispositif de préparation (100) selon l'une des revendications précédentes, dans lequel le plan de travail (120) est formé en tant que plaque vitrocéramique et/ou plaque de cuisson.

13. Dispositif de préparation (100) selon l'une des revendications précédentes, dans lequel un élément chauffant (500) permettant de chauffer le module fonctionnel (145) ou un aliment reçu dans le module fonctionnel (145) entre le plan de travail (120) et l'appareil d'entraînement (125), en particulier dans la région d'un module fonctionnel (145) disposé sur le plan de travail (120).

14. Plaque de cuisson comportant les caractéristiques suivantes :
un plan de travail (120) comportant au moins une zone de cuisson et une ouverture de passage (150) ;
une chambre de réception ouverte sur l'ouverture de passage (150) ;
au moins un appareil de chauffage permettant de chauffer l'au moins une zone de cuisson ; et un dispositif de préparation (100) selon l'une des revendications précédentes 1 à 11, lequel est disposé dans la chambre de réception.
